# EUROPEAN PATENT APPLICATION

(11) **EP 3 098 488 A1**
(43) Date of publication of application: **30.11.2016**
(21) Application number: 16170530.6
(22) Date of filing: 20.05.2016
(51) Int. Cl.: F16J 15/3204, F16J 15/3208, F16J 15/3224, F16J 15/3252, F16J 15/3256

(54) **SEAL ASSEMBLY**

(30) Priority: 27.05.2015 GB 201509014
(71) Applicant: Delphi International Operations Luxembourg S.à r.l., 4940 Bascharage (LU)
(72) Inventor: HARDING, Keith James, Dorset, BH31 7DB (GB); WADE, Ben, Kent (GB)
(74) Representative: Delphi France SAS

(57) **Abstract**

A seal assembly (40; 140; 240; 340) for sealing a drive shaft (9) in a pump housing (17; 32) defining a volume (19) for receiving fluid within the pump housing, the seal assembly comprising a first annular member (42) comprising a first elastomer compound, the first annular member (42) being configured to seal against the drive shaft (9), in use; and a second annular member (44) providing a support for the first annular member (42) and comprising a second elastomer compound, the second annular member (44) being configured to seal against the pump housing (17; 32), in use. The second elastomer compound has a relatively high flexibility compared to the first elastomer compound, so that the seal assembly (40; 140; 240; 340) can flex to maintain the seal between the first annular member (42) and the drive shaft (9), in use, even at relatively low temperatures for which the first elastomer compound is relatively inflexible.

## Description

### FIELD OF THE INVENTION

The present disclosure relates to a seal assembly for use on a drive shaft of a fuel pump. In particular, the invention relates to a seal assembly for use on a drive shaft of a diesel fuel injection pump. The invention also relates to the fuel pump incorporating the seal assembly.

### BACKGROUND OF THE INVENTION

A diesel fuel pump known in the art comprises a pair of opposed pumping plungers 1, 2, each of which is arranged to pressurise fuel within a respective pump chamber 3, 4 defined within a respective pump head 5, 6. Each plunger 1, 2 is coupled to a vented tappet, 7, 8 respectively, which is driven, in use, by means of a drive shaft 9 which carries a cam 10. As the drive shaft rotates, the tappets 7, 8, and the associated plungers 1, 2, are driven outwardly from the drive shaft 9 to perform a pumping stroke in which fuel within the pump chambers 3, 4, is pressurised for delivery to a fuel injection system (not shown) downstream of the pump. A return stroke of each plunger 1, 2 is effected by means of an associated return spring 15, 16. During the return stroke fuel is drawn into the pump chamber 3, 4 ready for the next pumping stroke. The tappets cooperate with the surface of the cam 10 directly. The pump heads 5, 6 are mounted on a main pump housing 17 which includes multiple housing parts.

The drive shaft 9 extends through the pump housing 17 and is mounted on three bearings, labelled at 21, located at different axial positions along the drive shaft 9. The drive shaft 9 is immersed in lubricating fluid, such as lubricating oil from an engine or diesel fuel (or a derivative), which fills a fluid volume 19 defined within the pump housing 17 which surrounds the drive shaft 9. A seal assembly, referred to generally as 20, seals against the drive shaft 9 to prevent fluid within the volume 19 from escaping from the pump.

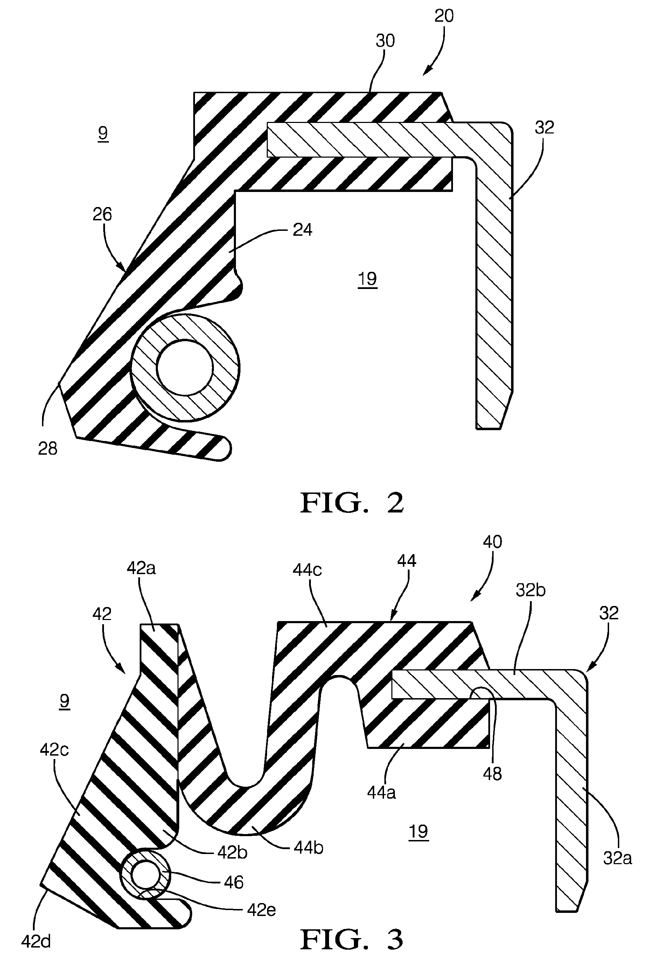

Figure 2 shows a section view of a known seal assembly 20 for use in sealing the drive shaft 9 in the aforementioned manner. The seal assembly 20 is annular in nature and the figure shows only a part of the assembly in cross-section with the axis of the drive shaft 9 passing to the left hand side of the figure. The seal assembly 20 is mounted on the drive shaft 9, remote from the bearing, with the intention of providing a fluid tight seal between the fluid-filled volume 19 and the exterior 22 of the pump. The seal assembly 20 includes an annular seal member 24 through which the drive shaft 9 is received. A radially inner side of the seal member 24 defines a surface 26 having a sealing lip 28 which engages the drive shaft 9, whilst a bifurcated flange 30 on the radially outer side of the seal member 24 engages with a chassis part 32 attached to the pump housing 17.

It is known to form the seal member 24 from an elastomer material which has good durability properties. However, a potential problem is anticipated due to the stiffness characteristic of the material which changes with temperature. In particular, for temperatures below normal pump operating temperatures (close to or lower than the glass transition temperature of the material), the stiffness of such materials tends to increase with the result that the seal member 24 has a reduced flexibility. Due to the lateral movement of the drive shaft 9 within the bearings 21, the reduced flexibility at low temperatures can reduce the effectiveness of the seal formed between the sealing lip 28 and the drive shaft 9, which may lead to leakage of fluid from the volume 19 to the exterior 22 of the pump.

One solution is to use high performance compounds which provide adequate flexibility across a wider temperature range, and including at low temperatures, but these compounds have a significant cost.

It is one object of the invention to provide a seal assembly which provides an alternative solution to the aforementioned problem.

### STATEMENTS OF INVENTION

Aspects and embodiments of the invention are set out in the accompanying claims.

According to one aspect of the invention, there is provided a seal assembly for sealing a drive shaft in a pump housing defining a volume for receiving fluid within the pump housing. The seal assembly comprises a first annular member comprising a first elastomer compound, the first annular seal member being configured to seal against the drive shaft, in use, and a second annular member providing a support for the first annular member and comprising a second elastomer compound, the second annular member being configured to engage with the pump housing, in use. The second elastomer compound has a relatively high flexibility compared to the first elastomer compound, so that the seal assembly can flex to maintain the seal between the first annular member and the drive shaft, in use, even at relatively low temperatures at which the first elastomer material is relatively inflexible (compared to the second elastomer compound).

Typically, the seal between the first annular member and the drive shaft is maintained even at relatively low temperatures below a threshold temperature of between -35 and -25 degrees Centigrade. Typically, the threshold temperature where problems occur in the prior art is around -30 degrees Centigrade. In the known seal assembly, problems are encountered at and below these temperatures because of the lack of flexibility of the material used for the seal component. Benefits are achieved with the present invention because the second elastomer compound has a relatively high flexibility compared to the first elastomer, even at relatively low temperatures, and there is sufficient flexibility to ensure an effective seal is maintained with the drive shaft should it move laterally within the bearing. This flexibility is achieved without compromising the material choice for the first annular member, which can therefore be selected to have a high durability (even if it has reduced flexibility at low temperatures). This avoids the unwanted leakage of lubricating fluid past the bearing.

The flexibility of a material may be determined by one or more of the following material properties: elongation at break, fracture strain, tensile strength. Elongation at break represents the ability of a material to resist changes of shape without crack formation.

In one embodiment, the first elastomer compound is selected so as to be one which has a relatively high durability compared to the second elastomer compound.

The material for the second elastomer compound is selected so that good flexibility is retained at temperatures below the threshold temperature (typically -30 degrees Centigrade).

By way of example, the first elastomer material is selected to be one which has a glass transition temperature which is higher than the minimum operating temperature of the pump. The desired minimum operating temperature of a diesel fuel injection pump is often as low as -40 degrees Centigrade, which is below the temperature at which problems are experienced in the known seal assembly. However, typically the usual minimum operating temperature of the pump may be closer to -25 degrees Centigrade.

In one embodiment, the second annular member includes a curved region to aid flexing. For example, the second annular member may include a U-shaped section.

The first annular member may include a sealing lip which seals against the drive shaft, in use.

In another embodiment, the seal assembly may include a rigid annular member, for example in the form of a steel ring, located between the first and second annular members to aid adhesion between the first and second annular members. The rigid annular member provides the further benefit that tilt of the first annular member due to movement of the drive shaft within the bearing, in use, is resisted due to the rigidity of the support ring.

In a further modification, the seal assembly may include means to limit axial movement of the second annular member relative to the first annular member due to fluid pressure within the volume acting on the second annular member. This further enhances the performance of the seal assembly by preventing undesirable compression/deformation of the seal member.

Reference to "axial movement" of the second annular member refers to movement of the second annular member along the axis of the drive shaft.

The means to limit axial movement may comprise a lower plate which extends transversely from the rigid annular member beneath the first and second annular members (i.e. within the fluid-filled volume).

Alternatively, in another embodiment said means may include an upper plate which engages with one side of the second annular member to oppose fluid pressure within the volume acting on the second annular member. In this case, the upper plate resides externally to the fluid-filled volume, on the exterior of the pump.

By way of example, the upper plate may include an axially extending wall for cooperation with the housing, in use, to secure the upper plate in place.

An upper surface of the second annular member and an upper surface of the rigid annular member may be engaged with the underside of the upper plate so as to ensure that the upper surface of the first annular member is spaced from the upper plate. This prevents undesirable wear of the first annular member.

According to another aspect of the invention, there is provided a fuel pump comprising a drive shaft, a fluid volume and a seal assembly for sealing against the drive shaft to prevent leakage of fluid from the volume. For example, the fuel pump may be of the type used in a diesel engine for diesel fuel.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment or aspect can be combined in any way and/or combination, unless such features are incompatible.

### BRIEF DESCRIPTION OF THE DRAWINGS

One or more embodiments of the invention will now be described, by way of example only, with reference to the accompanying drawings, in which:

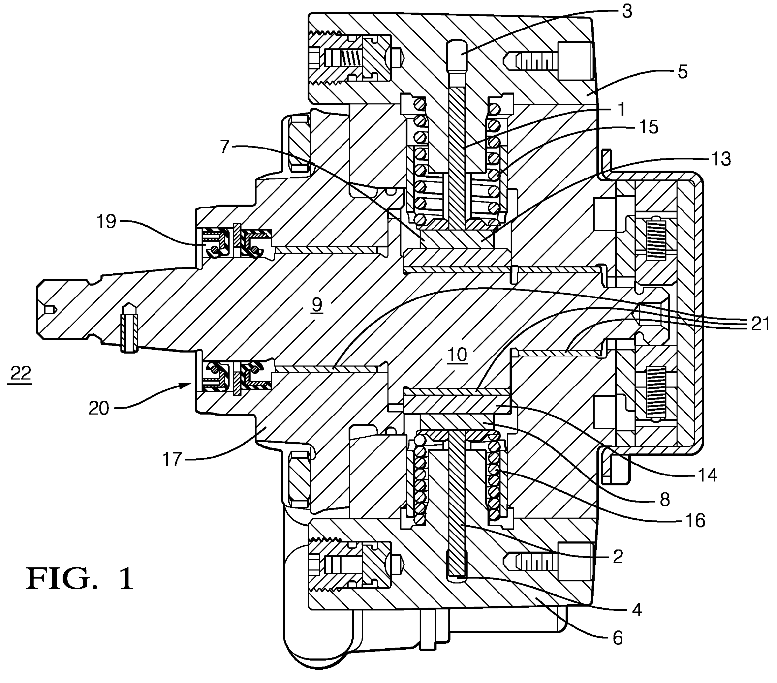

Figure 1 is a schematic diagram of a known fuel pump with which a seal assembly of the invention may be used;
Figure 2 is a section view of a part of the seal assembly in Figure 1;
Figure 3 is a section view of a seal assembly of a first embodiment of the invention;
Figure 4 is a section view of a seal assembly of a second embodiment of the invention;
Figure 5 is a section view of a seal assembly of a third embodiment of the invention; and
Figure 6 is a section view of a seal assembly of a fourth embodiment of the invention.

The seal assembly of the present invention is intended for use in a fuel pump of the type described previously. The seal assembly is particularly suitable for use in a diesel fuel pump such as that used in a compression ignition internal combustion engine, but is also applicable to other pump applications, and including gasoline fuel pumps. As described previously, and referring to Figure 3, the drive shaft 9 of the fuel pump is supported within a pump housing, including a chassis part 32, by means of a bearing (not shown) located towards one end of the drive shaft 9. A seal assembly 40 is necessary to ensure that lubricating fluid (e.g. oil) within a fluid-filled volume 19 inside the pump housing is unable to leak to the exterior of the pump past the drive shaft 9.

The seal assembly 40 comprises first and second annular members, 42, 44 respectively, with the second annular member 44 providing a support for the first annular member 42.

The first annular member 42 is a seal member which includes an upper portion 42a and a lower portion 42b and forms the sealing component of the assembly which cooperates with the drive shaft 9. The lower portion 42b of the seal member 42 defines a sloping, radially inner surface 42c which terminates in a lower sealing lip 42d which engages with the drive shaft 9, in use. The radially outer surface of the lower portion 42b of the seal member 42 is provided with an annular recess 42e for receiving a garter spring 46. The garter spring 46 serves to increase static sealing on the drive shaft 9 (when the drive shaft is stationary) by imparting a radially-directed load to the lower sealing lip 42.

The chassis part 32 of the pump housing on which the seal assembly is mounted includes a vertical wall portion 32a which extends downwardly from an outer edge of an upper horizontal plate 32b of the chassis part 32. The support member 44 includes a mounting portion 44a which cooperates with the chassis part 32 to mount the support member securely to chassis part 32. The mounting portion 44a takes the form of a bifurcated flange region which defines a groove 48 within which the horizontal plate 32b of the chassis part 32 is received. The mounting portion 44a of the support member 44 in Figure 3 is slightly thicker than the equivalent region of the known seal assembly shown in Figure 2, but this need not be the case and the mounting portion 44a may be formed with a greater or reduced thickness depending on other dimensions and the application.

The volume 19 defined beneath the support member 44, and between the vertical wall 32a of the chassis part 32 and the seal member 42, is filled with lubrication fluid. In use, the seal assembly 40 serves to prevent fluid within the volume 19 from leaking past the drive shaft 9 to the exterior of the pump.

The support member 44 also includes a curved region 44b of generally U-shaped cross section which is connected to the mounting portion 44a by a bridging region 44c. Together, the U-shaped region 44b, the bridging region 44c and the inner part of the mounting portion 44a define a generally 'S-shaped' configuration for the support member 44. The S-shaped configuration of the support member 44 ensures good flexibility, in use. An inner surface of the U-shaped region 44b of the support member 44 engages with a radially outer surface of the seal member 42 and is attached to the support member 44. In order to assemble the parts together, the support 44 is typically injection moulded onto the chassis part 32, and the seal member 42 is then injection moulded onto the support 44 to attach the seal member 42 securely to the support 44.

The seal member 44 is formed from a first elastomer compound having good durability and a high wear factor, whereas the support member 44 is formed from a second elastomer material, different from the first, which has good flexibility at low temperatures, but at the expense of high durability. Typically, for example, the first elastomer compound for the seal member 42 is a fluoro rubber material such as a Viton ® or FKM (a fluoroelastomer category according to the American standard ASTM). The normal glass transition temperature of the first elastomer may be in the region of around -25 degrees Centigrade.

With this arrangement, the seal member 42 provides the necessary durability to prevent excessive wear at the drive shaft interface, whereas the support member 44 is able to flex to accommodate any movement of the drive shaft 9 within the bearing without loss of the sealing function. This performance can be maintained over a full range of operating temperatures, and including at temperatures below a threshold temperature at which the flexibility of the seal member 42 may otherwise be compromised because stiffness is increased. Typically, problems may be encountered in known seal arrangements at temperatures below a threshold temperature of around -35 degrees Centigrade due to the inherent inflexibility of the high durability materials which it is necessary to use for the drive shaft seal. In the present invention, the combination of the high wear properties of the material of the seal member 42 and the high flexibility of the material of the support 44 ensures that the seal assembly 40 still seals against the drive shaft 9 adequately to prevent fluid escaping from the volume 19. The seal member 42 may therefore have a reduced flexibility compared to the support member 44, without compromising overall performance of the seal assembly.

Because the seal member 42 is not required to have a high flexibility, the material choice for this component is less restricted and the material can be chosen for its wear properties (or hardness), rather than for its flexibility. This reduces the overall cost of the assembly compared to known designs which require expensive compounds to provide the necessary flexibility and durability for a unitary seal member (part 24, as in Figure 2). In particular, in the known seal assembly in Figure 2, the seal member 24 suffers from the disadvantage that its performance at low temperature is compromised. This is because the materials from which the seal member is formed, which need to have good wear properties because of the cooperation with the drive shaft 9, are not flexible at low temperatures, and so the inherent run out of the drive shaft within the bearing can cause leakage to occur. The present invention solves this problem by forming the seal assembly 40 from two separate flexible parts, formed from different materials with different properties, with the part 42 that cooperates with the drive shaft being chosen to have good durability/wear properties, albeit with a lower flexibility, and the part 44 which provides the support to the chassis part 32 being chosen to have good flexibility, even at low temperatures, albeit with reduced durability.

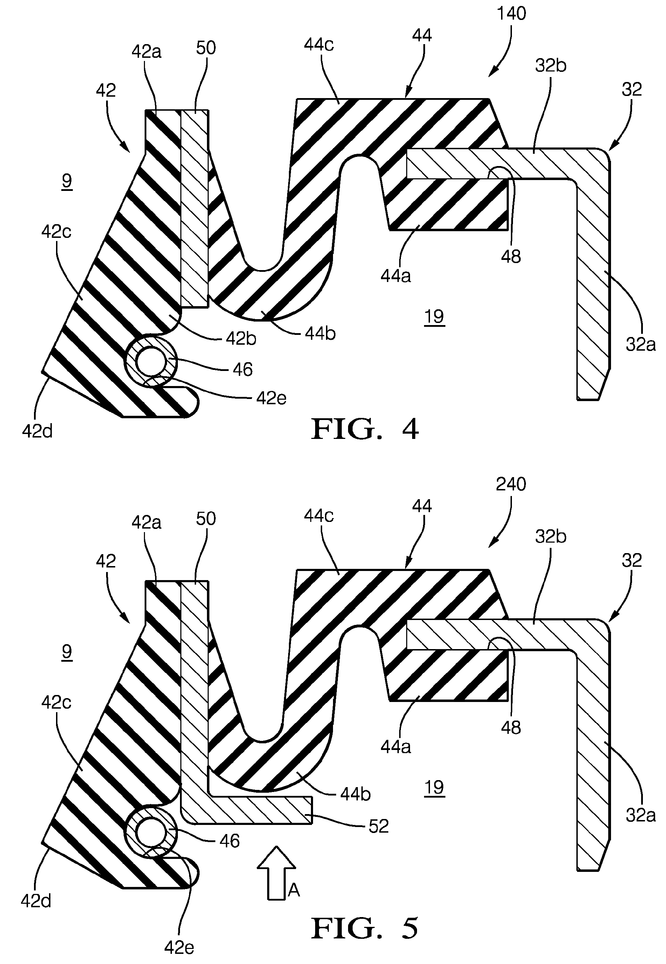

Figure 4 shows a modification to the previous embodiment in which like parts to those shown in Figure 3 are denoted with the same references numerals. In the Figure 4 embodiment, the seal assembly 140 includes an additional rigid annular member 50 in the form of a support ring which is arranged between the support member 44 and the seal member 42. The support ring 50 is typically formed from steel and serves to aid adhesion between the support member 44 and the seal member 42. The support ring 50 also provides lateral support for the seal member 42, and so serves to prevent tilting of the seal member 42 during use as the drive shaft 9 rotates.

Figure 5 shows a further embodiment of the seal assembly 240 in which like parts to those shown in previous figures are denoted with the same reference numerals. In this embodiment the annular support ring 50 is provided with a flange or annular plate 54 which extends radially outward from the lower end of the support ring 50 and locates just beneath the U-shaped section 44b of the support member 44 within the fluid-filled volume 19. Together, the support ring 50 and the plate 52 define an L-shape cross section. Due to the flexibility of the support member 44, some compression/movement of the support member 44 may occur due to the pressure of fluid within the volume 19 which applies an upwardly directed force (as indicated by the arrow A) to the support member 44. The provision of the flange 52 on the support ring 44 serves to limit this axial movement or distortion as it shields the exposed U-shaped section 44b from fluid pressure within the volume 19.

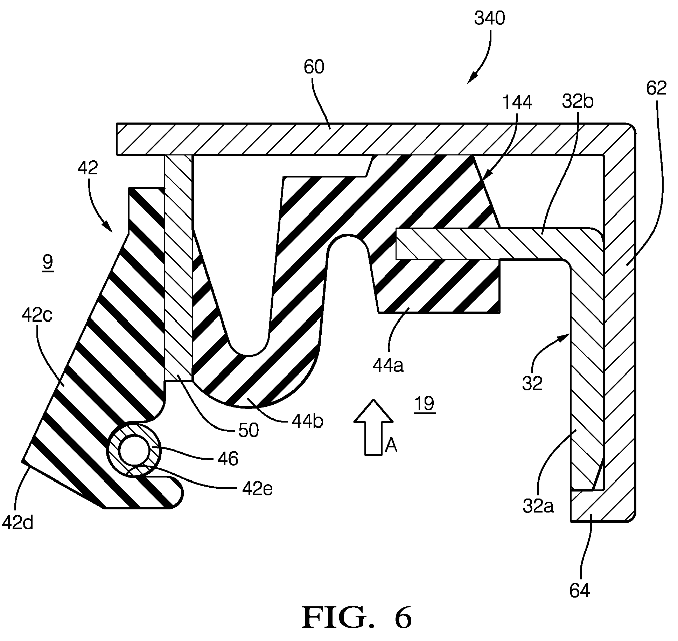

Figure 6 shows a further embodiment of the seal assembly 340 which also serves to limit axial movement of the support member 44 by providing an upper annular plate 60 above the assembly on the exterior side of the pump. The plate 60 is provided with an annular vertical wall 62 which extends downwardly from the radially outer edge of the plate 60 so as to engage with the radially outer surface of the chassis part 32. A flange 64 at the base of the vertical wall 62 cooperates with the lower end of the wall 32a of the chassis part 32 to hold the support 44 and the plate 60 securely in position. As in Figures 4 and 5, the support ring 50 is positioned between the support member 44 and the seal member 42. The plate 60 serves to limit axial movement of the support member 44 which may otherwise occur due to fluid pressure within the volume 19 acting along the direction of the arrow, A, and thus provides a similar function to the support ring 50 and the flange 52 in Figure 5.

In Figure 6, however, the support ring 50 is raised to a slightly higher position so that the upper end of the support ring 50 protrudes above the seal member 42. The mounting region 144 of the support member 44 is also of raised height compared to the previous embodiments, having a raise step which also projects beyond the height of the seal member 42. The positions of the support ring 50 and the mounting region 144 of the support member 44 are configured so that the upper surface of the support ring 50 lies in the same plane as the upper surface of the mounting region 144 of the support member 44, with both being in abutment with the underside of the plate 60. In this embodiment, and as in Figures 4 and 5, the support ring 50 provides a support for the seal member 42 and so minimises the impact of tilt of the drive shaft 9 as it is driven in use. The provision of the support ring 50 in its raised vertical position, and the corresponding increased height of the mounting region 144 of the support member 44, ensures the upper surface of the seal member 42 is spaced from the upper plate 60 and thus prevents rubbing of the upper surface of the seal member 42 against the plate 60.
It will be appreciated by a person skilled in the art that the invention could be modified to take many alternative forms without depositing from the scope of the appended claims.

## Claims

1. A seal assembly (40; 140; 240; 340) for sealing a drive shaft (9) in a pump housing (17; 32) defining a volume (19) for receiving fluid within the pump housing, the seal assembly comprising:
a first annular member (42) comprising a first elastomer compound, the first annular member (42) being configured to seal against the drive shaft (9), in use; and
a second annular member (44; 144) providing a support for the first annular member (42) and comprising a second elastomer compound, the second annular member (44) being configured to seal against the pump housing (17; 32), in use;
wherein the second elastomer compound has a relatively high flexibility compared to the flexibility of the first elastomer compound, so that the seal assembly (40; 140; 240; 340) is able to flex to maintain the seal between the first annular member (42) and the drive shaft (9), in use, even at relatively low temperatures and wherein,
the seal assembly further comprises a rigid annular member (50; 50, 52) located between the first and second annular members (42, 44; 42, 144) to aid adhesion between the first and second annular members.

2. The seal assembly as claimed in claim 1, wherein the material of the second elastomer compound is selected to ensure the seal is maintained between the first annular member (42) and the drive shaft (9) at temperatures below about -25 degrees Centigrade.

3. The seal assembly as claimed in claim 1 or claim 2, wherein the first elastomer compound has a relatively high durability compared to the durability of the second elastomer compound.

4. The seal assembly as claimed in any of claims 1 to 3, wherein the first elastomer compound is selected to be a material which has a glass transition temperature greater than the minimum operating temperature of the pump.

5. The seal assembly as claimed in any of claims 1 to 4, wherein the second annular member (44; 144) includes a curved region (44b) to aid flexing of the support (44).

6. The seal assembly as claimed in claim 5, wherein the second annular member (44; 144) includes a U-shaped section (44b).

7. The seal assembly as claimed in any of claims 1 to 6, wherein the first annular member (42) includes a sealing lip (44d) which seals against the drive shaft (12), in use.

8. The seal assembly as claimed in claim 7, wherein the rigid annular member comprises a steel ring (50).

9. The seal assembly as claimed in any of claims 1 to 8, comprising means (52; 60, 62, 64) to limit axial movement of the second annular member (44) relative to the first annular member (42) due to fluid pressure within the volume (19) acting on the second annular member (44).

10. The seal assembly as claimed in claim 9 when dependent on claim 8 or 9, wherein said means to limit axial movement comprises a lower plate (52) which extends transversely from the rigid annular member (50) beneath the first and second annular members (42, 44).

11. The seal assembly as claimed in claim 10, wherein said means includes an upper plate (60) which engages with one side of the second annular member (44) to oppose fluid pressure within the volume (19) acting on the second annular member (44), in use.

12. The seal assembly as claimed in claim 11, wherein an upper surface of the first annular member (42) is spaced from the underside of the upper plate (60).

13. The seal assembly as claimed in claim 12, wherein an upper surface of the second annular member (44) and an upper surface of the rigid annular member (50) engage with the underside of the upper plate (60).

14. A fuel pump comprising a drive shaft, a fluid volume (14) and a seal assembly (40; 140; 240; 340) as claimed in any of claims 1 to 13 for sealing against the drive shaft (12) to prevent leakage of fluid from the volume (19) in use.
